# EUROPEAN PATENT SPECIFICATION

(11) **EP 0 496 129 B1**
(45) Date of publication and mention of the grant of the patent: **01.02.1995**
(21) Application number: 91202911.3
(22) Date of filing: 11.11.1991
(51) Int. Cl.: B29C 47/20, E04C 2/54, A01G 9/14, B32B 3/12

(54) **Double-walled sheet extruded from a synthetic resin**
Extrudierte Doppelwandplatte aus Kunststoff
Panneau à double paroi extrudé de matière plastique

(30) Priority: 21.01.1991 NL 9100093
(43) Date of publication of application: 29.07.1992
(73) Proprietor: GENERAL ELECTRIC COMPANY, Schenectady, NY 12345 (US)
(72) Inventor: Brink, Ronald, General Electric Plastics B.V., NL-4600 AC Bergen op Zoom (NL)
(74) Representative: Pratt, Richard Wilson

(56) References cited:
- EP-A- 0 050 462
- DE-A- 1 925 744
- NL-A- 6 607 674
- US-A- 3 274 315
- US-A- 3 616 018
- US-A- 4 443 987

## Description

The invention relates to a double-walled sheet extruded from a synthetic resin and comprising two walls which extend at least substantially parallel to each other and which are connected together by partitions which extend at regular distances from each other and perpendicular to the walls, and by obliquely extending partitions so as to each extend from a connection point between one wall and a partition extending perpendicular to the wall to a connection point between the other wall and a partition extending perpendicular to the walls.

NL-A-66 07 674 describes double walled sheets in which the walls can be connected by two types of partitions i.e. partitions at a right angle to the walls and partitions oblique to the walls. The oblique partitions can all be parallel or can alternate to form a V-shape between two adjacent oblique partitions.

According to the invention, the oblique partitions situated on each side of a longitudinal central plane (5) extending at right angles to the walls extend from one wall oppositely inclined with respect to each other, and the obliquely extending partitions have a thinner construction than the perpendicular extending partitions.

The construction according to the invention has a higher strength to weight ration when loaded perpendicular to the parallel walls in a direction explained herebelow.

The invention will now be described in greater detail with reference to the accompanying drawing,the sole figure of which is a diagrammatic cross-sectional view through a double-walled sheet according to the invention.

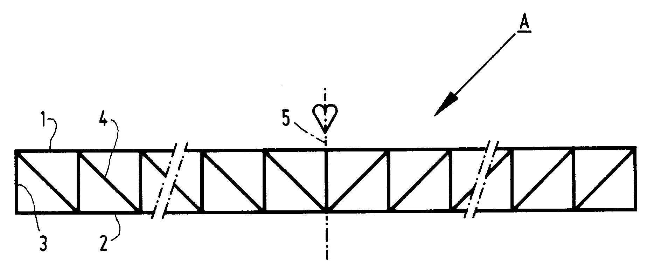

The double-walled sheet A shown in the diagrammatic cross-sectional view of Figure 1 and manufactured from polycarbonate by extrusion comprises two walls 1 and 2 extending parallel to each other. The walls 1 and 2 are connected together by partitions 3 extending perpendicular to the walls and formed integrally with the said walls. Between the connection point of a partition 3 to the upper wall 1 in the Figure and a connection point of an adjacent partition to the lower wall 2, each time an obliquely extending partition 4 extends. As will further be clear from the Figure the partitions 4 which are situated on one side of a longitudinal central plane 5 extending in the longitudinal direction of the sheet and at right angles to the walls 1 and 2, extend from their connection points to the lower sheet 2 upwards at an angle in a direction opposite to the direction in which the inclined partitions 4 situated on the other side of the said longitudinal central plane extend upwards at an angle from their connection to the lower wall 2.

When used, for example, as a roof covering, such a sheet will be arranged so that the wall 1 forms the outside and top side, respectively, of the sheet and hence downwards directed forces viewed in the Figure will be exerted on the top wall 1 under the influence of a positive load, for example, a snow load. If the double-walled sheet tends to bend under the influence of the said load, the oblique partitions 4 will be tensile-loaded to thus effectively prevent bending. Such a tensile load can be absorbed effectively by the obliquely extending partitions already with a comparatively thin construction of the obliquely extending partitions 4. Therefore, these partitions will in practice be given an as thin as possible construction. As a result of the thin construction of the partitions 4, the inclined partitions 4, in view of their small wall thickness, will easily bend and hence will not absorb any load in the case of a load in a direction opposite to the above-decribed direction, for example, wind load, if the double-walled sheet is used as a roof covering or the like. The double-walled sheet will then behave as a conventional double-walled sheet having only partitions which extend perpendicular to the walls.

In practice the preferred construction for the sheet will be chosen to be that in which the wall 1 is slightly thicker than the wall 2. The partitions extending perpendicular to the wall will in general be chosen to be slightly thinner than the wall 2, while the obliquely extending partitions 4 will be thinnest.

When using the construction according to the invention, an effective material distribution will produce a double-walled sheet which is particularly suitable for roof coverings or the like and which can excellently absorb the bending loads exerted on such a sheet during use, in which a sheet which has a comparatively low weight can nevertheless be obtained by an effective distribution of the materials between the walls and the partitions.

## Claims

1. A double-walled sheet extruded from a synthetic resin and comprising two walls (1, 2) which extend at least substantially parallel to each other and which are connected together by partitions (3) which extend at regular distances from each other and perpendicular to the walls (1, 2) and by obliquely extending partitions (4) so as to each extend from a connection point between one wall (1 or 2) and a partition (3) extending perpendicular to the wall (1 or 2) to a connection point between the other wall (1 or 2) and a partition (3) extending perpendicular to the walls, wherein the oblique partitions (4) situated on each side of a longitudinal central plane (5) extending at right angles to the walls (1, 2) extend from one wall (1 or 2) oppositely inclined with respect to each other, and wherein the obliquely extending partitions (4) have a thinner construction than the perpendicular extending partitions (3).

2. A double-walled sheet as claimed in Claim 1, wherein the oblique partitions (4) and the elongations of the said partitions (4), respectively, situated on each side of the longitudinal central plane (5) of the sheet enclose an angle of 90° with each other.

3. A double-walled sheet as claimed in Claim 1 or 2, wherein one wall (1 or 2) of the sheet has a thicker construction than the other wall (1 or 2) of the sheet.

4. A double-walled sheet as claimed in any of the preceding Claims, wherein the walls (1, 2) of the sheet are thicker than the partitions (3, 4).

## Patentansprüche

1. Aus einem synthetischen Harz extrudierte Doppelwand-Platte, die zwei Wände (1,2) umfaßt, die sich zumindest im wesentlichen parallel zueinander erstrecken und die miteinander durch Zwischenwände (3), die sich in regulären Abständen voneinander und senkrecht zu den Wänden (1,2) erstrecken und durch sich schräg erstreckende Zwischenwände (4) verbunden sind, die sich jeweils von einem Verbindungspunkt zwischen einer Wand (1 oder 2) und einer Zwischenwand (3), die sich senkrecht zu der Wand (1 oder 2) erstreckt, bis zu einem Verbindungspunkt zwischen der anderen Wand (1 oder 2) und einer Zwischenwand (3) erstrecken, die sich senkrecht zu den Wänden erstreckt, wobei die schrägen Zwischenwände (4), die auf jeder Seite einer longitudinalen Mittelebene (5) angeordnet sind, die sich in rechten Winkeln zu den Wänden (1,2) erstreckt, sich von einer Wand (1 oder 2) entgegengesetzt geneigt zueinander erstrecken und worin die sich schräg erstreckenden Zwischenwände (4) eine dünnere Konstruktion als die sich senkrecht erstreckenden Zwischenwände (3) aufweisen.

2. Doppelwandige Platte nach Anspruch 1, worin die schrägen Zwischenwände (4) bzw. die Verlängerungen dieser Zwischenwände (4), die auf jeder Seite der longitudinalen Mittelebene (5) der Platte angeordnet sind, einen Winkel von 90° zueinander einschließen.

3. Doppelwandige Platte nach Anspruch 1 oder 2, worin eine Wand (1 oder 2) der Platte eine dickere Konstruktion aufweist als die andere Wand (1 oder 2) der Platte.

4. Doppelwandige Platte nach irgendeinem der vorhergehenden Ansprüche, worin die Wände (1,2) der Platte dicker als die Zwischenwände (3,4) sind.

## Revendications

1. Panneau à double paroi, extrudé à partir d'une résine de synthèse et comprenant deux parois (1, 2) qui s'étendent au moins sensiblement parallèles l'une à l'autre et qui sont raccordées ensemble par des cloisons (3) s'étendant à distance régulière les unes des autres et perpendiculairement auxdites parois (1, 2) et par des cloisons (4) qui s'étendent obliquement de sorte que chacune va d'un point de liaison entre une paroi (1 ou 2) et une cloison (3) perpendiculaire à la paroi (1 ou 2) jusqu'à un point de liaison entre l'autre paroi (1 ou 2) et une cloison (3) perpendiculaire aux parois, dans lequel les cloisons obliques (4) placées de chaque côté d'un plan central (5) longitudinal, s'étendant à angle droit par rapport aux parois (1, 2), partent d'une paroi (1 ou 2) en étant inclinées en sens opposé les unes des autres, et dans lequel les cloisons (4) s'étendant obliquement sont de construction plus mince que les cloisons (3) s'étendant perpendiculairement.

2. Panneau à double paroi selon la revendication 1, dans lequel les cloisons obliques (4) et les prolongements desdites cloisons (4) placés respectivement de chaque côté du plan central longitudinal (5) du panneau font un angle de 90° les unes par rapport aux autres.

3. Panneau à double paroi selon la revendication ou 2, dans lequel une paroi (1 ou 2) du panneau est de construction plus épaisse que l'autre paroi (1 ou 2) du panneau.

4. panneau à double paroi selon l'une quelconque des précédentes revendications, dans lequel les parois (1, 2) du panneau sont plus épaisses que les cloisons (3, 4).
